# EUROPÄISCHE PATENTSCHRIFT

(11) **EP 2 383 937 B1**
(45) Veröffentlichungstag und Bekanntmachung des Hinweises auf die Patenterteilung: **21.02.2018**
(21) Anmeldenummer: 11164436.5
(22) Anmeldetag: 02.05.2011
(51) Int. Cl.: H04L 12/26, H04L 12/70, H04L 12/14, H04L 12/24, H04L 29/08

(54) **Erfassen und Vergebührung eines Datentransfers von markierten umgeleiteten Datenpaketen**
Capture and billing of a transfer of marked detoured data packets
Capture et tarification d'un transfert de paquets de données marqués déviés

(30) Priorität: 30.04.2010 DE 102010016719
(43) Veröffentlichungstag der Anmeldung: 02.11.2011
(73) Patentinhaber: Vodafone Holding GmbH, 40213 Düsseldorf (DE)
(72) Erfinder: Hengels, Erik, 41352 Korschenbroich (DE)
(74) Vertreter: Ring & Weisbrodt

(56) Entgegenhaltungen:
- EP-A1- 1 650 896
- WO-A1-01/69903

## Beschreibung

### Technisches Gebiet

Die Erfindung betrifft ein Verfahren gemäß Anspruch 1, ein System gemäß Anspruch 7 und eine Umleitungseinheit gemäß Anspruch 11. Bevorzugte Ausführungsformen ergeben sich aus den abhängigen Ansprüchen.

### Stand der Technik

Öffentliche zellulare Mobilfunknetze, wie beispielsweise ein Mobilfunknetz nach dem GSM/GPRS- (Global System for Mobile Communication / General Packet Radio Service) oder UMTS- (Universal Mobile Telecommunications System) Standard, ermöglichen einem Benutzer mit einem entsprechenden Mobilfunkendgerät eine bidirektionale mobile Kommunikation oder Inanspruchnahme von Diensten. Ein Datentransfer erfolgt dabei entweder leitungsorientiert durch eine Leitungsvermittlung oder paketorientiert durch eine Paketvermittlung.

Bei der Leitungsvermittlung wird ein exklusiver Übertragungskanal für den Datentransfer zwischen zwei Endgeräten geschaltet. Im Gegensatz dazu werden Daten bei einer Paketvermittlung in kleine Datenpakete aufgeteilt. Jedes Datenpaket wird über bestehende Übertragungskanäle zwischen Paketvermittlern vom Absender zum Empfänger weitergeleitet. Dabei können für einzelne Datenpakete unterschiedliche Übertragungskanäle verwendet werden und Datenpakete verschiedener Datentransfers gleichzeitig über einen Übertragungskanal übermittelt werden.

Eine Paketvermittlung findet beispielsweise bei einem Datentransfer im Internet statt. Um einen Benutzer eines Mobilfunkendgeräts einen Datentransfer über das Internet oder eine Nutzung von in dem Internet angebotenen Diensten zu ermöglichen, verfügen die oben genannten Mobilfunknetze über eine paketorientierte Vermittlungsinfrastruktur und ein Gateway zum Transferieren von Datenpaketen zwischen dem Mobilfunknetz und dem Internet. Durch die technische Weiterentwicklung der Mobilfunknetze mit immer größeren Datenübertragungsraten und Mobilfunkendgeräten mit leistungsfähigeren Anzeige- und Bedienungsmitteln wird die mobile Anwendung von paketorientierten Datendiensten zukünftig erheblich zunehmen.

Leitungsorientierte Verbindungen werden üblicherweise durch Erfassen von Vermittlungen, Entfernungen und Verbindungsdauern abgerechnet. Durch eine Verwendung von Sonderrufnummern mit bestimmten Vorwahlnummern ist ferner eine Abrechnung von in Anspruch genommenen Mehrwertdiensten durch einen Mobilfunknetzbetreiber möglich. Im Gegensatz dazu wird bei einer Paketvermittlung eine Zugriffsdauer auf ein paketorientiertes Netz oder das übertragene Datenvolumen erfasst und für eine Gebührenabrechnung verwendet.

Ein Problem bei einer Erfassung der Zugriffsdauer oder des übertragenen Datenvolumens einer Paketvermittlung ergibt sich dadurch, dass eine getrennte Abrechnung bestimmter angeforderter Daten oder Dienste durch den Mobilfunknetzbetreiber nicht möglich ist. Wenn beispielsweise ein Dienstanbieter im Internet eine Benutzung bzw. ein Runterladen einer bestimmten Webseite für einen Mobilfunkteilnehmer kostenfrei ermöglichen möchte, so ist dieses für den Mobilfunknetzbetreiber mit einer reinen Zugriffsdauer- oder Datenvolumenerfassung nicht durchführbar.

Es sind daher Verfahren und Vorrichtungen bekannt, bei denen der Inhalt jedes übermittelten Datenpakets untersucht wird, um auf diese Weise eine Zuordnung der Datenpakete zu einer bestimmten Daten- oder Dienstanforderung zu gewährleisten. Beispielsweise wird in der EP 1 269 730 B1 ein Erzeugen von Rechnungsdaten für WAP-Dienste beschrieben. Mit WAP (Wireless Application Protocol) werden eine Reihe von Techniken und Protokolle bezeichnet, mit denen Internetinhalte für die langsameren Datenübertragungsraten im Mobilfunknetz und für die kleinen grafischen Anzeigen von Mobilfunktelefonen verfügbar gemacht werden. Die EP 1 269 730 B1 sieht bei einem WAP-Gateway zwischen einem Mobilfunknetz und dem Internet eine Untersuchung des Inhalts aller übermittelten Datenpakete durch eine Identifikationseinrichtung vor. Dabei wird eine genaue Internetadresse des jeweiligen WAP-Dienstes (z.B. einer WAP-Seite) aus dem Inhalt für jedes Datenpaket ermittelt. Anhand einer bei der Identifikationseinheit gespeicherten Tabelle wird anschließend zu jeder ermittelten Internetadresse der entsprechende Dienst dem jeweiligen Tarif zugeordnet. Auf diese Weise lässt sich für jedes übertragene Datenpaket eine vom Dienst abhängige Abrechnung durchführen. Nachteilig an dem Verfahren nach der EP 1 269 730 B1 ist jedoch, dass jedes über das WAP-Gateway übertragene Datenpaket untersucht werden muss, um diejenigen Datenpakete zu erfassen, für die anstelle einer reinen Datenvolumenabrechnung eine dienstbezogene Abrechnung vorgesehen ist. Durch diese sehr zeit- und rechenintensive Vorgehensweise ergibt sich bei einer Paketvermittlung ein erheblicher Aufwand. Der Mobilfunknetzbetreiber muss kostenträchtig entsprechende Ressourcen bereitstellen und warten.

### Offenbarung der Erfindung

Aufgabe der Erfindung ist es daher, Nachteile des Standes der Technik zu vermeiden und eine datenbezogene oder dienstbezogene Erfassung von Datenpaketen bei einer Paketvermittlung mit geringem Aufwand zu erzielen.

Die Erfindung beruht auf dem Prinzip, einen auf eine Daten- oder Dienstanforderung eines Endgeräts erfolgenden Datentransfer zwischen dem Endgerät und einem Server über eine Umleitungseinheit durchzuführen. Als Umleitungseinheit kann beispielsweise ein Server, ein Proxy oder ein Router mit einer eindeutigen Netzadresse verwendet werden. Es werden nur Datenpakete derjenigen Daten- oder Dienstanforderungen umgeleitet, für die eine Erfassung in Abhängigkeit des Dienstes oder der Datenanforderung erwünscht ist. Dies kann beispielsweise bei Datentransfers von Diensten mit einer von den allgemeinen Abrechnungsregeln abweichenden Vergebührung der Fall sein.

Dabei wird in jedes Datenpaket des umgeleiteten Datentransfers ein Identifikationsmerkmal eingefügt. Dieses kann sowohl bei dem Endgerät als auch bei dem Server erfolgen. Das Identifikationsmerkmal ist eindeutig einem Dienst oder Daten zugeordnet und kann beispielsweise eine alphanummerische Zeichenfolge, eine Zufallszahl oder eine Adresse des Dienstes oder der Daten, z.B. ein URI (Uniform Resource Identifier), sein.

Mit dem in die Datenpakete eingefügten Identifikationsmerkmal wird eine Zuordnung von Datenpaketen zu einem bestimmten Dienst oder zu bestimmten Daten des Servers bei der Umleitungseinheit unkompliziert durchführbar. Dazu wird jedes bei der Umleitungseinheit empfangene Datenpaket mit der Identifizierungseinheit nach dem Identifikationsmerkmal durchsucht. Eine Erfassung eines Datentransfers auf eine Daten- oder Dienstanfrage erfolgt anschließend durch die erste Erfassungseinheit mittels der identifizierten Datenpakete des Datentransfers. Somit ist eine dienst- oder datenbezogene Erfassung vorteilhaft auch dann unproblematisch gewährleistet, wenn der Server viele verschiedene Dienste anbietet oder über das Endgerät gleichzeitig mehrere Dienste oder Daten eines Servers in Anspruch genommen werden.

Mit dem Umleiten des Datentransfers einer Daten- oder Dienstanforderung über eine Umleitungseinheit und dem Erfassen des umgeleiteten Datentransfers durch eine Erfassungseinheit anhand der durch das Identifikationsmerkmal identifizierten Datenpakete nach dem erfindungsgemäßen Verfahren oder dem erfinderischen System wird eine effektive datenbezogene oder dienstbezogene Erfassung von Datenpaketen bei einer Paketvermittlung mit geringem Aufwand ermöglicht. Es müssen vorteilhaft nicht mehr alle zwischen dem Endgerät und dem Server ausgetauschten Datenpakete auf ihre Zugehörigkeit zu bestimmten Diensten oder Daten untersucht werden. Vielmehr wird nun bereits durch die Umleitung eine Dienst- oder Datenzugehörigkeit von zu erfassenden Datenpaketen festgelegt. Es genügt eine Erfassung der umgeleiteten Datenpakete, um diese bestimmten Diensten oder Daten zuzuordnen.

Die Identifizierungseinheit und die Erfassungseinheit der erfinderischen Umleitungseinheit ermöglichen ebenfalls eine dienst- oder datenspezifische Erfassung eines Datentransfers mit nur geringem Aufwand. Dazu wird jedes bei der Umleitungseinheit empfangene Datenpaket auf das darin enthaltene Identifikationsmerkmal durchsucht. Anschließend erfolgt eine von angeforderten Diensten oder Daten abhängige Erfassung der umgeleiteten Datenpakete bei der Umleitungseinheit. Es werden somit die bereits oben genannten Vorteile auch durch die Umleitungseinheit erzielt.

Bei dem erfinderischen Computerprogrammprodukt mit computerlesbaren Anweisungen, welche zur Durchführung des erfinderischen Verfahrens geeignet sind, wird zusätzlich eine vorteilhafte Einrichtung und Durchführung des Verfahrens mit vorhandenen Rechnern und anderen Ressourcen kostengünstig ermöglicht.

Eine vorteilhafte Ausbildung des erfindungsgemäßen Verfahrens wird durch ein Zuordnen einer Adresse angeforderter Daten oder Dienste des Servers anhand des Identifikationsmerkmals zu empfangenen Datenpaketen bei der Umleitungseinheit für eine Erfassung der Datenpakete und eine Weiterleitung der Datenpakete an den Server erzielt. Bei einer Erfassung wird nunmehr direkt die Adresse der Daten oder Dienste verwendet. Dieses Vorgehen erleichtert eine Handhabung und Auswertung eines erfassten Datentransfers. Die Adresse der Daten oder Dienste steht ferner unmittelbar für eine Weiterleitung der Datenpakete an den Server zur Verfügung. Somit wird die Weiterleitung einfacher durchführbar.

In einer bevorzugten Ausgestaltung des erfindungsgemäßen Verfahrens wird ein Übermitteln des Identifikationsmerkmals für angeforderte Daten oder Dienste des Servers als Antwort auf die Daten- oder Dienstanforderung von dem Server an das Endgerät durchgeführt. Auf diese Weise erhält das Endgerät unmittelbar auf eine Dienst- oder Datenanforderung ein eindeutiges Identifikationsmerkmal für zu übermittelnde Datenpaket von dem Server. Eine Speicherung oder Erzeugung von Identifikationsmerkmalen bei dem Endgerät wird ressourcenschonend vermieden.

Bei einer weiteren bevorzugten Ausgestaltung des erfinderischen Verfahrens enthält ein Kopfdatenabschnitt der Datenpakete die Netzadresse der Umleitungseinheit. Adressen in einem Kopfdatenabschnitt, wie beispielsweise ein sogenannter IP-Header bei Datenpaketen im Format des Internet Protokolls, werden von Netzelemente im Netzwerk für eine Weiterleitung an den Empfänger verwendet. Durch die Netzadresse der Umleitungseinheit im Kopfdatenabschnitt wird eine unkomplizierte Weiterleitung von Datenpaketen über die Umleitungseinheit mit vorhandenen Netzwerkressourcen ermöglicht.

Das Identifikationsmerkmal wird bei einer vorteilhaften Ausbildung des erfindungsgemäßen Verfahrens ebenfalls in einen Kopfdatenabschnitt jedes Datenpakets eingefügt. Die Kopfdatenabschnitte der Datenpakete werden nun von der Identifizierungseinheit durchsucht. Daten in einem Kopfdatenabschnitt liegen üblicherweise in einem bestimmten Format, z.B. nach dem Internet Protokoll, vor. Somit wird eine schnelle und einfache Durchsuchung von Datenpaketen mit der Identifizierungseinheit ermöglicht. Es muss jeweils nur der Kopfdatenabschnitt eines Datenpakets durchsucht werden.

In einer alternativen Ausbildung des erfindungsgemäßen Verfahrens wird das Identifikationsmerkmal in einen Nutzdatenabschnitt jeweils eines Datenpakets eingefügt und die Nutzdatenabschnitte der Datenpakete von der Identifizierungseinheit durchsucht. Bei dieser Vorgehensweise ist eine umfangreichere Durchsuchung des Datenpakets notwendig. Dafür muss das Identifikationsmerkmal vorteilhaft nicht Formatvorgaben des Kopfdatenabschnitts entsprechen oder eine umständliche Erweiterung des Kopfdatenabschnitts erfolgen.

Die Umleitungseinheit wird bei einer weiteren bevorzugten Ausgestaltung des erfindungsgemäßen Verfahrens im Datentransfer zwischen dem Gateway und dem Server bereitgestellt. Dazu verfügt die Umleitungseinheit mindestens über eine Verbindung zum paketorientierten Datennetz, so dass über dieses Datennetz sowohl ein Datentransfer zum Gateway, als auch ein Datentransfer zum Server möglich ist. Optional kann auch eine zusätzliche direkte Verbindung zum Gateway vorgesehen sein. Auf diese Weise sind keine Änderungen an der Infrastruktur des Telekommunikationsnetzes notwendig. Alle Datenpakete eines entsprechenden Datentransfers werden vom Endgerät über das Gateway an die Umleitungseinheit oder den Server paketvermittelt. Umgekehrt senden der Server oder die Umleitungseinheit Datenpakete über das Gateway an das Endgerät. In einer alternativen Ausbildung kann die Umleitungseinheit aber auch zwischen dem Gateway und dem Endgerät im Telekommunikationsnetz vorgesehen sein, um vorhandene Ressourcen im Telekommunikationsnetz zu nutzen und die Sicherheit beim Datentransfer zu erhöhen.

Die erste Erfassungseinheit wird gemäß einer Ausbildung der Erfindung vorzugsweise bei der Umleitungseinheit bereitgestellt. Da die Weiterleitung aller umgeleiteten Datenpakete über die Umleitungseinheit erfolgt, liegen bei der Umleitungseinheit die Adresse des Servers bzw. des Dienstes oder der Daten und die Adresse des Endgeräts in den Datenpaketen vor. Daher ist eine effektive und zuverlässige Erfassung von umgeleiteten Datenpaketen auf einfache und direkte Art durchführbar.

Dabei erfasst die erste Erfassungseinheit vorzugsweise die Anzahl von Datenpaketen, die Transferrichtung, die Transferdauer, die Absenderadresse und/oder die Empfängeradresse der Datenpakete. Diese wesentlichen Transferwerte lassen sich durch die Umleitung jeweils angeforderten Diensten oder Daten zuordnen. Die erfassten, dienst- oder datenspezifischen Transferwerte bei Inanspruchnahme von paketvermittelten Diensten oder Daten lassen sich vielfältig verwenden. Beispielsweise wird eine zuverlässige und unkomplizierte Erstellung von Abrechnungen oder Nutzungsstatistiken mit Berücksichtigung der jeweiligen Dienste oder Daten ermöglicht.

Bei einer Weiterbildung des erfindungsgemäßen Verfahrens ist ein Erfassen eines nicht umgeleiteten Datentransfers von Datenpaketen zwischen dem Endgerät und dem Server durch eine zweite Erfassungseinheit vorgesehen. Zusammen mit der ersten Erfassungseinheit wird nunmehr sowohl der umgeleitete als auch der nicht umgeleitete Datentransfer zwischen dem Endgerät und dem Server erfasst. Die Erfassung des Datentransfers erstreckt sich somit auf alle Datenpakete, die zwischen dem Endgerät und dem Server ausgetauscht werden. Auf diese Weise wird die Erfassung des Datentransfers optimiert.

Vorzugsweise wird die zweite Erfassungseinheit bei dem Gateway zwischen dem Telekommunikationsnetz und dem paketorientierten Datennetz bereitgestellt. Über das Gateway werden alle Datenpakete, insbesondere auch nicht umgeleitete Datenpakete, des Datentransfers zwischen dem Endgerät im Telekommunikationsnetz und dem Server im paketorientierten Datennetz paketvermittelt. Beim Gateway liegen die nicht umgeleiteten Datenpakete jeweils mit Absende- und Empfängeradresse vor. Folglich wird bei dieser Ausgestaltung des erfindungsgemäßen Verfahrens eine einfache, direkte und zuverlässige Erfassung von nicht umgeleiteten Datenpaketen ermöglicht.

Die zweite Erfassungseinheit erfasst in einer bevorzugten Ausbildung des erfinderischen Verfahrens die Anzahl von Datenpaketen, die Transferrichtung, die Transferdauer, die Absenderadresse und/oder die Empfängeradresse der Datenpakete. Diese wesentlichen Transferwerte werden nun nicht nur für umgeleitete Datenpakete, sondern auch für nicht umgeleitete Datenpakete erfasst. Hierdurch wird die Erfassung von Datentransfers zwischen dem Endgerät und dem Server verbessert.

Bei einer vorteilhaften Weiterbildung des erfindungsgemäßen Verfahrens erfolgt ein Ermitteln von Gebührendaten durch eine Gebührenermittlungseinheit anhand des erfassten Datenpakettransfers. Auf diese Weise lässt sich für jeden erfassten paketorientierten Datentransfer einer bestimmten Daten- oder Dienstanforderung eine daten- oder dienstspezifische Gebühr ermitteln. Dabei können beispielsweise besondere Abrechnungsregeln für bestimmte Daten- oder Dienstanforderungen berücksichtigt werden.

Die Gebührendaten werden dabei in einer Ausbildung des erfinderischen Verfahrens vorzugsweise jeweils für einen Benutzer des Endgeräts und für einen Anbieter von Daten oder Diensten über den Server ermittelt. Hierdurch wird eine getrennte Abrechnung jeweils für einen Dienst- oder Datenanbieter und einen Benutzer des Endgeräts bei einer Inanspruchnahme eines Dienstes oder von Daten durch den Benutzer ermöglicht. Eine Vergebührung lässt sich somit genauer an die Bedürfnisse und Wünsche des Dienst- oder Datenanbieters anpassen.

Ferner wird eine bevorzugte Ausgestaltung des erfindungsgemäßen Verfahrens dadurch erzielt, dass der Server als Web-Server Daten oder Dienste im Format von Webseiten oder als WAP-Server Daten oder Dienste im Format von WAP-Seiten zur Verfügung stellt. Web- und WAP-Seiten besitzen eine eindeutige Adresse und verfügen über Verweise (Links) auf andere Seiten bzw. Daten oder Dienste. Sie stellen den üblichen Zugang zu Diensten oder Daten im Internet oder einem Intranet dar. Das erfinderische Verfahren ist somit insbesondere auch für Web- und WAP-Seiten anwendbar, so dass ein Erfassen des Runterladens bestimmter Seiten oder Seiteninhalte vom Server an das Endgerät durchführbar ist.

Eine vorteilhafte Ausbildung des erfindungsgemäßen Erfassungssystems für einen Datentransfer von Datenpaketen zwischen einem Endgerät und einem Server enthält eine Zuordnungseinheit zum Zuordnen einer Adresse angeforderter Daten oder Dienste des Servers anhand des Identifikationsmerkmals zu empfangenen Datenpaketen bei der Umleitungseinheit für eine Erfassung der Datenpakete und eine Weiterleitung der Datenpakete an den Server. Die Adresse angeforderter Daten oder Dienste wird unmittelbar für eine Erfassung verwendet und erleichtert eine Auswertung von verschiedenen erfassten Datentransfere. Weiterhin wird eine Weiterleitung der Datenpakete an den Server durch die nun direkt zur Verfügung stehenden Adresse der Daten oder des Dienstes vereinfacht.

Eine weitere vorteilhafte Ausgestaltung des erfindungsgemäßen Erfassungssystems sieht Übermittelungsmittel zum Übermitteln des Identifikationsmerkmals für angeforderte Daten oder Dienste des Servers als Antwort auf die Daten- oder Dienstanforderung von dem Server an das Endgerät vor. Wie bei der entsprechenden Ausgestaltung des erfindungsgemäßen Verfahrens erhält das Endgerät direkt auf eine Dienst- oder Datenanforderung ein eindeutiges Identifikationsmerkmal für zu übermittelnde Datenpaket. Eine Speicherung oder Erzeugung von Identifikationsmerkmalen bei dem Endgerät wird ressourcenschonend vermieden.

Weitere Ausbildungen des erfindungsgemäßen Erfassungssystems, der erfinderischen Umleitungseinheit und des Computerprogrammprodukts korrespondieren jeweils mit oben beschriebenen Ausgestaltungen des erfindungsgemäßen Verfahrens und verfügen daher über entsprechende Vorteile.

Ferner ergeben sich weitere Ausgestaltungen und Vorteile aus dem Gegenstand der Unteransprüche, sowie der Zeichnungen mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

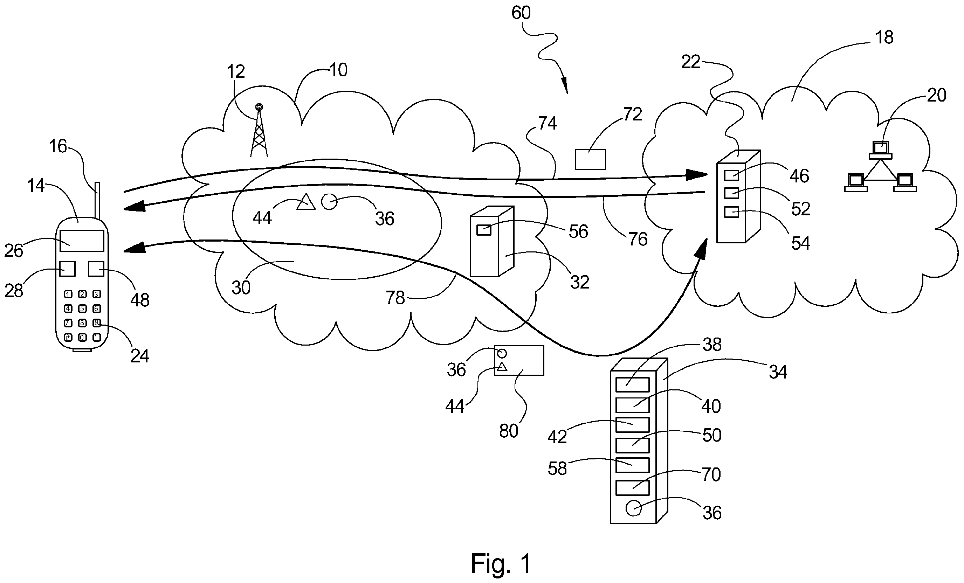

- Fig. 1: zeigt in einer schematischen Prinzipskizze ein Ausführungsbeispiel des erfindungsgemäßen Verfahrens zum Erfassen eines Datentransfers von Datenpaketen und ein entsprechendes Erfassungssystem.

### Bevorzugtes Ausführungsbeispiel

In Fig. 1 wird mit 10 als Telekommunikationsnetz ein Mobilfunknetz bezeichnet. In alternativen Ausführungen ist eine analoge Verwendung von Festnetzen als Telekommunikationsnetz, beispielsweise nach dem Analog-, ISDN- oder DSL-Standard möglich. Dabei werden zum paketorientierten Zugriff auf ein paketorientiertes Datennetz entsprechend geeignete Endgeräte, wie beispielsweise ein für paketvermittelte Verbindungen geeignetes Telefon, ein stationärer Rechner (z.B. PC) oder mobiler Rechner (z.B. Notebook, PDA) oder ein anderes Gerät mit einer eingebauten oder über eine Schnittstelle angeschlossenen Festnetzschnittstelle (z.B. Modem oder Rooter) verwendet.

Das Mobilfunknetz 10 ist ein öffentliches, zellulares Mobilfunknetz der 2,5., 3. oder 4. Generation und ist beispielsweise nach dem GSM-, GPRS-, EDGE-, UMTS-, HSDPA-, CDMA2000-, FOMA-, TD-SCDMA-, LTE/SEA oder WiMAX-Standard ausgebildet. Dem Fachmann sind solche Mobilfunknetze mit den entsprechenden Bestandteilen bekannt. Der Einfachheit halber wird das Mobilfunknetz 10 daher nur durch eine Wolke mit einem darin enthaltenen Funkmast 12 stilisiert dargestellt.

Das Mobilfunknetz 10 ermöglicht einem Benutzer mit einem Mobilfunkendgerät 14 eine mobile Kommunikation oder eine Inanspruchnahme von Diensten über eine Mobilfunkschnittstelle 16. Ferner ermöglicht das Mobilfunknetz 10 mit dem Mobilfunkendgerät 14 einen paketorientierten Zugriff auf das Internet als ein öffentliches paketorientiertes Datennetz 18. Aufbau und Funktionsweise des Internets 18 sind dem Fachmann ebenfalls bekannt. Das Internet 18 wird daher in Fig. 1 durch eine Wolke mit darin enthaltenen, untereinander verbundenen Rechnern 20 stilisiert dargestellt. Alternativ ist auch ein Zugriff auf ein privates paketorientiertes Datennetz 18, beispielsweise ein Unternehmens-Intranet, möglich. Ferner kann der Zugriff auf das paketorientierte Datennetz 18 auch über weitere zwischen dem Mobilfunknetz 10 und dem paketorientierten Datennetz 18 vorgesehene, in Fig. 1 nicht dargestellte Kommunikationsnetze erfolgen.

In dem paketorientierten Datennetz 18 ist üblicherweise eine Vielzahl von Servern vorgesehen, von denen ein Benutzer Dienste oder Daten anfordern kann. In Fig. 1 wird exemplarisch ein solcher Server 22 dargestellt. Der Server 22 kann z.B. ein Web-Server für Webseiten, ein WAP-Server für WAP-Seiten, ein Email-Server, ein Applikationsserver, ein Content-Server für Inhalte wie Texte, Bilder, Videos, Audiodaten, Musik, Filme, Chats oder Nachrichten, ein Informationsserver oder ein Onlineshop-Server sein. Der Server 22 bietet einem Benutzer somit freie oder kostenpflichtige Dienste oder Daten an. Zu diesen Diensten oder Daten können neben dem Anbieten von Web- oder WAP-Seiten und E-Mails auch FTP-Dateiübertragung (File Transfer Protocol), Telnet zur Benutzung fremder Rechner, Peer-to-Peer-Systeme (z.B. Tauschbörsen), Internettelefonie, Video-Chat, Internetradio, Internetfernsehen, Onlinehandel, Onlineverleih, Suchdienste oder Dienste zur Bildung von sozialen Netzwerken gehören.

Das Mobilfunkendgerät 14 ist beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 16 (z.B. eine PMCCIA-Karte). Neben anderen, für eine Kommunikation über das Mobilfunknetz 10 notwendigen und einem Fachmann bekannten Vorrichtungen und Funktionalitäten enthält das Mobilfunkendgerät 14 insbesondere eine Bedienungseinheit 24 und eine Anzeige 26. Weiterhin verfügt das Mobilfunkendgerät 14 über einen so genannten Browser zum Darstellen von Web- oder WAP-Seiten auf der Anzeige 26 und Anwählen von Links auf Web- oder WAP-Seiten mit der Bedienungseinheit 24. Mit einer separaten oder im Browser integrierten Anforderungseinheit 28 sendet das Mobilfunkendgerät 14 Dienst- oder Datenanforderungen an den Server 22.

Die Dienst- oder Datenanforderungen und der gesamte daraufhin erfolgende Datentransfer zwischen dem Mobilfunkendgerät 14 und dem Server 22 erfolgt paketorientiert mit Datenpaketen über das Mobilfunknetz 10. Dazu enthält das Mobilfunknetz 10 eine dem Fachmann bekannte paketorientierte Datentransfervorrichtung 30. Die Datentransfervorrichtung 30 des Mobilfunknetzes 10 besteht beispielsweise aus Basisstationen und Basisstationskontrollern als Komponenten eines Zugriffsnetz, und einer paketorientierten Datenübertragungsinfrastruktur im Kernnetz bzw. Vermittlungsnetz (Packet Switched Domain). Dem Fachmann sind aus den unterschiedlichen Mobilfunkstandards verschiedene Funktionen, Strukturen und Komponenten zur Realisierung der paketorientierten Datentransfervorrichtung 30 bekannt, welche daher hier nicht detailierter beschrieben werden. Zum Datentransfer zwischen dem Mobilfunknetz 10 und dem paketorientierten Datennetz 18 enthält das Mobilfunknetz 10 insbesondere ein Gateway 32. Über das Gateway 32 werden Datenpakete eine Datentransfers zwischen dem Mobilfunknetz 10 und dem Datennetz 18 ausgetauscht.

Weiterhin ist eine Umleitungseinheit 34 mit einer eindeutigen Netzadresse 36 zum Umleiten eines Datentransfers zwischen dem Mobilfunkendgerät 10 und dem Server 22 vorgesehen. Die Umleitungseinheit 34 ist beispielsweise als Server, Proxy oder Router ausgebildet und befindet sich in diesem Ausführungsbeispiel bezüglich eines Datentransfers zwischen dem Gateway 32 und dem Server 22. Dabei kann die Umleitungseinheit 34 Bestandteil des Mobilfunknetzes 10 oder des paketorientierten Datennetzes 18 sein. Die Umleitungseinheit 34 verfügt zumindest über eine Verbindung zum paketorientierten Datennetz 18, so dass über dieses Datennetz 18 sowohl ein Datentransfer zum Gateway 32, als auch ein Datentransfer zum Server 22 möglich ist. Es kann auch eine zusätzliche direkte Verbindung zum Gateway 32 vorgesehen sein. Alternativ kann die Umleitungseinheit 34 bezüglich des Datentransfers auch zwischen dem Mobilfunkendgerät 14 und dem Gateway 32 im Mobilfunknetz 10 angeordnet sein.

Die Umleitungseinheit 34 enthält neben einer Datentransfereinrichtung 38 zum Weiterleiten von empfangenen Datenpaketen von einem Absender an einen Empfänger eine erste Erfassungseinheit 40 zum Erfassen von über die Umleitungseinheit 34 umgeleiteten Datenpaketen eines Datentransfers. Dabei erfasst die Erfassungseinheit 40 unter anderem die Anzahl von Datenpaketen, die Transferrichtung, die Transferdauer, die Absenderadresse und die Empfängeradresse der Datenpakete.

In der Umleitungseinheit 34 ist eine Identifizierungseinheit 42 zum Durchsuchen und Identifizieren von über die Umleitungseinheit 34 weitergeleiteten Datenpaketen anhand eines Identifikationsmerkmals 44 in den Datenpaketen vorgesehen. Das Identifikationsmerkmal 44 ist dienst- oder datenabhängig und besteht beispielsweise aus einer alphanummerischen Zeichenfolge, einer Zufallszahl, einer Adresse bzw. URI (Uniform Resource Identifier) des Dienstes oder der Daten oder einer Kombination von diesen. Die Kennzeichnung von über die Umleitungseinheit 34 umgeleiteten Datenpaketen mit dem Identifikationsmerkmal 44 erfolgt je nach Transferrichtung beim Absender. Dazu sind erste Kennzeichnungsmittel 46 beim Server 22 und zweite Kennzeichnungsmittel 48 beim Mobilfunkendgerät 14 vorgesehen. Das Identifikationsmerkmal 44 wird entweder in einem Kopfdatenabschnitt oder einem Nutzdatenabschnitt eines Datenpakets eingefügt. Kopfdaten- und Nutzdatenabschnitte sind beispielsweise bei Datenpaketen nach dem Internetprotokoll als sogenannter Header bzw. Body bekannt. Mit einer Zuordnungseinheit 50 der Umleitungseinheit 34 wird das aufgefundene Identifikationsmerkmal 44 einem bestimmten Dienst oder bestimmten Daten des Servers 22 zugeordnet. Dazu kann eine Tabelle oder eine Datenbank mit jeweils den Identifikationsmerkmalen 44 zugeordneten Adressen von Diensten oder Daten verwendet werden.

Zum Übermitteln der Netzadresse 36 der Umleitungseinheit 34 von dem Server 22 an das Mobilfunkendgerät 14 sind beim Server 22 Sendemittel 52 vorgesehen. Ebenso sind für ein Senden des Identifikationsmerkmals 44 an das Mobilfunkendgerät 14 Übermittlungsmittel 54 im Server 22 enthalten. Die Netzadresse 36 und das Identifikationsmerkmal 44 werden von dem Mobilfunkendgerät 14 bei einer Umleitung von Datenpaketen an den Server 22 benötigt.

Ferner verfügt das Gateway 32 über eine zweite Erfassungseinheit 56 zum Erfassen von nicht umgeleiteten Datenpaketen. Dazu erfasst die zweite Erfassungseinheit 56 unter anderem die Anzahl von Datenpaketen, die Transferrichtung, die Transferdauer, die Absenderadresse und die Empfängeradresse der Datenpakete. Von der ersten und der zweiten Erfassungseinheit 40, 56 ermittelte Transferwerte werden anschließend zur Vergebührung an eine Gebührenermittlungseinheit 58 in der Umleitungseinheit 34 oder im Mobilfunknetz 10 übertragen.

Die Umleitungseinheit 34 mit der Datentransfereinrichtung 38, der ersten Erfassungseinheit 40, der Identifizierungseinheit 42 und der Zuordnungseinheit 50; die ersten Kennzeichnungsmittel 46, die Sendemittel 52 und die Übermittlungsmittel 56 beim Server 22; die zweiten Kennzeichnungsmittel 48 und die Anforderungseinheit 28 beim Mobilfunkendgerät 14 und die zweite Erfassungseinheit 56 beim Gateway 32 bilden zusammen ein Erfassungssystem 60. In alternativen Ausführungen können einzelne Komponenten des Erfassungssystems 60 auch in anderen Bestandteilen des Erfassungssystems 60, des Mobilfunknetzes 10, des Mobilfunkendgeräts 14 oder des paketorientierten Datennetzes 18 angeordnet sein.

Insbesondere sind in einem alternativen Ausführungsbeispiel der Erfindung die ersten Kennzeichnungsmittel 46, die Sendemittel 52 für die Netzadresse 36 und die Übermittlungsmittel 56 für das Identifikationsmerkmal 44 statt im Server 22 in der Umleitungseinheit 34 vorgesehen. Zusätzlich umfasst die Umleitungseinheit 34 dann eine Empfangseinrichtung zum Empfangen einer Weiterleitungsaufforderung vom Server 22 für einen Datentransfer zwischen dem Server 22 und dem Mobilfunkendgerät 14.

Im Folgenden wird die Funktionsweise der oben beschriebenen Komponenten des Erfassungssystems 60 zusammen mit einem entsprechenden Verfahren zum Erfassen eines Datentransfers zwischen dem Mobilfunkendgerät 14 und dem Server 22 beschrieben.

Zunächst legt ein Betreiber des Servers 22 die Dienste oder Daten fest, bei denen, z.B. wegen besonderer Abrechnungsregeln, zur Erfassung des zugehörigen Datentransfers eine Umleitung über die Umleitungseinheit 34 erfolgen soll. Beispielhaft für solche Dienste oder Daten wird im Folgenden eine Webseite 70 auf dem Server betrachtet, deren Inhalte für Benutzer ohne Übermittlungsgebühren kostenfrei zur Verfügung gestellt werden soll. Selbstverständlich lässt sich das hier dargestellte Ausführungsbeispiel auch mit anderen Daten oder Diensten des Servers 22 für eine dienst- oder datenabhängige Erfassung des Datentransfers durchführen.

Möchte ein Benutzer des Mobilfunkendgeräts 14 die Webseite 70 zum Betrachten auf das Mobilfunkendgerät 14 runterladen, so gibt er die Adresse dieser Webseite 70 mit Hilfe der Bedienungseinheit 24 und der Anzeige 26 ein. Das Mobilfunkendgerät 14 übermittelt daraufhin mit der Anforderungseinheit 28 eine entsprechende Anforderung 72 über die Datentransfervorrichtung 30 des Mobilfunknetzes 10, das Gateway 32 und das paketorientierte Datennetz 18 an den Server 22, Pfeil 74.

Der Server 22 erkennt anhand der Anforderung 72, dass Inhalte der Webseite 70 an das Mobilfunkendgerät 14 übermittelt werden sollen und dass der hierfür notwendige Datentransfer zur Erfassung über die Umleitungseinheit 34 stattzufinden hat. Mit den Sendemitteln 52 übermittelt der Server 22 daraufhin die Netzadresse 36 der Umleitungseinheit 34 als Antwort über das paketorientierte Datennetz 18, das Gateway 32 und das Mobilfunknetz 10 an das Mobilfunkendgerät 14, Pfeil 76. Zusätzlich übermittelt der Server 22 mit den Übermittlungsmitteln 54 das dienst- oder datenabhängiges Identifikationsmerkmal 44 an das Mobilfunkendgerät 14. Alternativ ist dieser Vorgang auch über oder durch die Umleitungseinheit 34 möglich.

Der Empfang der Netzadresse 36 der Umleitungseinheit 34 löst bei dem Mobilfunkendgerät 14 eine Umleitung eines folgenden Datentransfers, Pfeil 78, über die Umleitungseinheit 34 aus. Unter Verwendung der Netzadresse 36 der Umleitungseinheit 34 werden Inhalte der Webseite 70 vom Server 22 und weitere Anforderungen und andere Daten vom Mobilfunkendgerät 14 über die Umleitungseinheit 34 umgeleiteten. Dabei werden mit den ersten Kennzeichnungsmitteln 46 des Servers 22 und den zweiten Kennzeichnungsmitteln 48 des Mobilfunkendgeräts 14 jeweils zu übermittelnde Datenpakete 80 vor der Übermittlung durch Einfügen des dienst- oder datenabhängigen Identifikationsmerkmals 44 gekennzeichnet.

Die von dem Mobilfunkendgerät 14 über das Mobilfunknetz 10 und das Gateway 32 oder von dem Server 22 über das paketorientierte Datennetz 18 bei der Umleitungseinheit 34 eingehenden Datenpakete 80 des umgeleiteten Datentransfers 78 werden von der Datentransfereinrichtung 38 empfangen. Die Identifizierungseinheit 42 durchsucht die Datenpakete 80 nach dem eingefügten Identifikationsmerkmal 44. Mit Hilfe des Identifikationsmerkmals 44 ordnet die Zuordnungseinheit 50 jedes Datenpaket 80 dem entsprechenden Dienst oder den Daten des Servers 22 zu. Dazu erfolgt, z.B. mit einer Datenbank oder einer Tabelle, eine Zuordnung einer eindeutigen Dienst- oder Datenadresse zu jedem Datenpaket 80. Beispielsweise wird den Datenpaketen 80 bei einem Runterladen von Inhalten der Webseite 70 jeweils die entsprechende Inhaltsadresse zugeordnet.

Die eindeutige Dienst- oder Datenadresse wird einerseits von der Datentransfereinrichtung 38 der Umleitungseinheit 34 zum Weiterleiten der empfangenen Datenpakete 80 an den Server 22 verwendet. Andererseits wird die eindeutige Dienst- oder Datenadresse oder ein anderes eindeutiges Dienst- oder Datenmerkmal zusammen mit der Adresse des Mobilfunkendgeräts 14 von der ersten Erfassungseinheit 40 bei der Umleitungseinheit 34 zum Erzeugen von dienst- oder datenabhängigen Datentransferwerten benutzt. So kann beispielsweise die Anzahl von Datenpaketen beim Runterladen von Inhalten der Webseite 70 oder beim Hochladen von Datenpaketen an die Webseite 70 durch das Mobilfunkendgerät 14 jeweils getrennt erfasst werden.

Zusätzlich wird durch die zweite Erfassungseinheit 56 beim Gateway 32 ein nicht umgeleiteter Datentransfer zwischen dem Mobilfunkendgerät 14 und dem Server 22 erfasst. Dabei werden beispielsweise alle vom Mobilfunkendgerät 14 direkt an den Server 22 übermittelten Datenpakete getrennt von den in umgekehrter Richtung übermittelten Datenpaketen gezählt.

Die von der ersten Erfassungseinheit 40 ermittelten dienst- oder datenabhängigen Transferwerte des umgeleiteten Datentransfers 78 und die von der zweiten Erfassungseinheit 56 ermittelten Transferwerte eines nicht umgeleiteten Datentransfers zwischen dem Server 22 und dem Mobilfunkendgerät 14 werden anschließend an die Gebührenermittlungseinheit 58 weitergeleitet. Für die Gebührenermittlungseinheit 58 ist somit eine Abrechnung des Datentransfers mit jeweils vom Dienst oder von Daten abhängigen Gebühren möglich. Dabei kann beispielsweise neben der Anzahl der Datenpakete auch die Transferrichtung berücksichtigt werden und somit getrennte Rechnungen für den Betreiber des Servers 22 bzw. einen Anbieter der Dienste und dem Benutzer des Mobilfunkendgeräts 14 bei der Inanspruchnahme eines bestimmten Dienstes oder bestimmter Daten erstellt werden. Im Falle der Webseite 70 ist daher ein kostenloser Zugriff des Benutzers mit dem Mobilfunkendgerät 14 möglich. Dabei können anfallende Transferkosten mit dem Betreiber des Servers 22 bzw. dem Anbieter der Webseite 70 abgerechnet werden.

Mit dem Erfassungssystem 60 und dem entsprechenden Verfahren ist folglich eine sehr differenzierte und genau an Wünsche und Bedürfnisse eines Anbieters anpassbare Vergebührung von in Anspruch genommenen Diensten und Daten des Servers 22 möglich. Die erfassten dienst- oder datenabhängigen Transferwerte ermöglichen ferner beispielsweise eine Erstellung von sehr präzisen Nutzungsstatistiken.

## Patentansprüche

1. Verfahren zum Erfassen eines bestimmten bidirektionalen Datentransfers von Datenpaketen (80) derjenigen Daten- oder Dienstanforderungen, für welche eine Erfassung in Abhängigkeit des Dienstes oder der Datenanforderung und eine Vergebührung erwünscht ist, zwischen einem Endgerät (14) eines Telekommunikationsnetzes (10) und einem Server (22) in einem paketorientierten Datennetz (18), das durch ein Gateway (32) mit dem Telekommunikationsnetz (10) verbunden ist, umfassend die Verfahrensschritte:
a) Übertragen (74) einer Daten- oder Dienstanforderung (72) für einen bestimmten Datentransfer von dem Endgerät (14) über das Telekommunikationsnetz (10), das Gateway (32) und das paketorientierte Datennetz (18) an den Server (22),
b) Übermitteln (76) einer Netzadresse (36) einer Umleitungseinheit (34) als Antwort auf die Daten- oder Dienstanforderung (72) für einen bestimmten Datentransfer von dem Server (22) an das Endgerät (14),
c) Durchführen einer Umleitung des bestimmten bidirektionalen Datentransfers (78) von dienst- oder datenbezogenen Datenpaketen (80) zwischen dem Endgerät (14) und dem Server (22) über das Telekommunikationsnetz (10), das Gateway (32), die Umleitungseinheit (34) und das paketorientierte Datennetz (18),
d) Einfügen eines dienst- oder datenbezogenen Identifikationsmerkmals (44) in die dienst- oder datenbezogenen Datenpakete (80) für den umgeleiteten Datentransfer bei dem Endgerät (14) und/oder bei dem Server (22),
e) Durchsuchen von empfangenen dienst- oder datenbezogenen Datenpaketen (80) nach dem Identifikationsmerkmal (44) durch eine Identifizierungseinheit (42) der Umleitungseinheit (34),
f) Erfassen des umgeleiteten bestimmten Datentransfers über die Umleitungseinheit (34) durch eine erste Erfassungseinheit (40) anhand der von der Identifizierungseinheit (42) durchsuchten Datenpakete (80) des umgeleiteten Datentransfers, und
g) Ermitteln von Gebührendaten durch eine Gebührenermittlungseinheit (58) der Umleitungseinheit (34) anhand des erfassten Datentransfers.

2. Verfahren nach Anspruch 1, **dadurch gekennzeichnet, dass**
ein Zuordnen einer Adresse angeforderter Daten oder Dienste des Servers (22) anhand des Identifikationsmerkmals (44) zu empfangenen Datenpaketen (80) durch eine Zuordnungseinheit (50) der Umleitungseinheit (34) für eine Erfassung der Datenpakete (80) und eine Weiterleitung der dienst- oder datenbezogenen Datenpakete (80) an den Server (22)
und/oder
ein Übermitteln (76) des Identifikationsmerkmals (44) für angeforderte Daten oder Dienste des Servers (22) als Antwort auf die Daten- oder Dienstanforderung (72) von dem Server (22) an das Endgerät (14)
erfolgt.

3. Verfahren nach einem der Ansprüche 1 bis 2, **dadurch gekennzeichnet, dass**
ein Kopfdatenabschnitt der dienst- oder datenbezogenen Datenpakete (80) die Netzadresse (36) der Umleitungseinheit (34) aufweist,
und/oder
das Identifikationsmerkmal (44) in einen Kopfdatenabschnitt jeweils eines dienst- oder datenbezogenen Datenpakets (80) eingefügt wird und die Kopfdatenabschnitte der dienst- oder datenbezogenen Datenpakete (80) von der Identifizierungseinheit (42) der Umleitungseinheit (34) durchsucht werden,
und/oder
das Identifikationsmerkmal (44) in einen Nutzdatenabschnitt jeweils eines dienst- oder datenbezogenen Datenpakets (80) eingefügt wird und die Nutzdatenabschnitte der Datenpakete (80) von der Identifizierungseinheit (42) der Umleitungseinheit (34) durchsucht werden.

4. Verfahren nach einem der Ansprüche 1 bis 3, **dadurch gekennzeichnet, dass**
die Umleitungseinheit (34) im Datentransfer zwischen dem Gateway (32) und dem Server (22) bereitgestellt wird,
und/oder
die erste Erfassungseinheit (40) bei der Umleitungseinheit (34) bereitgestellt wird,
und/oder
die Anzahl der Datenpakete (80), die Transferrichtung, die Transferdauer, die Absenderadresse und/oder die Empfängeradresse der Datenpakete (80) durch die erste Erfassungseinheit (40) erfasst wird.

5. Verfahren nach einem der Ansprüche 1 bis 4, **dadurch gekennzeichnet, dass**
ein Erfassen eines nicht umgeleiteten Datentransfers von Datenpaketen zwischen dem Endgerät (14) und dem Server (22) durch eine zweite Erfassungseinheit (56) erfolgt und/oder die zweite Erfassungseinheit (56) beim Gateway (32) bereitgestellt wird,
und/oder
die Anzahl der Datenpakete (80), die Transferrichtung, die Transferdauer, die Absenderadresse und/oder die Empfängeradresse der Datenpakete (80) durch die zweite Erfassungseinheit (56) erfasst wird,
und/oder
Gebührendaten jeweils für einen Benutzer des Endgeräts (14) und für einen Anbieter von Daten oder Diensten über den Server (22) ermittelt werden.

6. Verfahren nach einem der Ansprüche 1 bis 5,
**dadurch gekennzeichnet, dass**
der Server (22) als Web-Server Daten oder Dienste im Format von Webseiten (70) oder als WAP-Server Daten oder Dienste im Format von WAP-Seiten zur Verfügung stellt.

7. Erfassungssystem (60) für einen bestimmten bidirektionalen Datentransfer von Datenpaketen (80) derjenigen Daten- oder Dienstanforderungen, für welche eine Erfassung und Vergebührung in Abhängigkeit des Dienstes oder der Datenanforderung erwünscht ist, zwischen einem Endgerät (14) eines Telekommunikationsnetzes (10) und einem Server (22) in einem paketorientierten Datennetz (18), das durch ein Gateway (32) mit dem Telekommunikationsnetz (10) verbunden ist, umfassend:
a) eine Anforderungseinheit (28) des Endgerätes (14) zum Übertragen (74) einer Daten- oder Dienstanforderung (72) für einen bestimmten Datentransfer von dem Endgerät (14) über das Telekommunikationsnetz (10), das Gateway (32) und dem paketorientierten Datennetz (18) an den Server (22),
b) eine im Telekommunikationsnetz (10) angeordnete Datentransfervorrichtung (30) zum Durchführen des bestimmten bidirektionalen Datentransfers von Datenpaketen (80) zwischen dem Endgerät (14) und dem Server (22) über das Telekommunikationsnetz (10), das Gateway (32) und das paketorientierte Datennetz (18),
c) eine Umleitungseinheit (34) zum Empfangen und Weiterleiten der Datenpakete (80) des bestimmten bidirektionalen Datentransfers,
d) Sendemittel (52) des Servers (22) zum Übermitteln einer Netzadresse (36) der Umleitungseinheit (34) als Antwort (76) auf die vom Endgerät (14) an den Server (22) übertragene Daten- oder Dienstanforderung (72) an das Endgerät (14),
wobei
e) im Endgerät (14) und/oder im Server (22) angeordnete Kennzeichnungsmittel (46, 48) zum Einfügen eines dienst- und datenbezogenen Identifikationsmerkmals (44) in die Datenpakete (80) für den umgeleiteten bestimmten Datentransfer,
f) in der Umleitungseinheit (34) eine Identifizierungseinheit (42) zum Durchsuchen von empfangenen Datenpaketen (80) nach dem Identifikationsmerkmal (44),
g) in der Umleitungseinheit (34) eine erste Erfassungseinheit (40) zum Erfassen des bestimmten Datentransfers über die Umleitungseinheit (34) anhand der von der Identifizierungseinheit (42) durchsuchten und mit dienst- oder datenbezogenen Identifikationsmerkmalen (44) versehenen Datenpakete (80) des weitergeleiteten Datentransfers, und
h) in der Umleitungseinheit (34) eine Gebührenermittlungseinheit (58) zum Ermitteln von Gebührendaten anhand des erfassten Datentransfers
vorgesehen sind.

8. Erfassungssystem (60) nach Anspruch 7, **dadurch gekennzeichnet, dass**
in der Umleitungseinheit (34) eine Zuordnungseinheit (50) zum Zuordnen einer Adresse angeforderter Daten oder Dienste des Servers (22) anhand des Identifikationsmerkmals (44) zu empfangenen Datenpaketen (80) für eine Erfassung der Datenpakete (80) und eine Weiterleitung der dienst- oder datenbezogenen Datenpakete (80) an den Server (22),
und/oder
in der Umleitungseinheit (34) ein Übermittelungsmittel (54) zum Übermitteln des Identifikationsmerkmals (44) für angeforderte Daten oder Dienste des Servers (22) als Antwort auf die Daten- und Dienstanforderung (72) von dem Server (22) an das Endgerät (14),
und/oder
Kennzeichnungsmittel (46, 48) zum Einfügen des Identifikationsmerkmals (44) in einen Kopfdatenabschnitt jeweils eines Datenpakets (80)
vorgesehen sind
und die Identifizierungseinheit (42) der Umleitungseinheit (34) zum Durchsuchen von Kopfdatenabschnitten der Datenpakete (80) ausgebildet ist.

9. Erfassungssystem (60) nach einem der Ansprüche 7 oder 8,
**dadurch gekennzeichnet, dass**
die Kennzeichnungsmittel (46, 48) zum Einfügen des Identifikationsmerkmals (44) in einen Nutzdatenabschnitt jeweils eines Datenpakets (80) und die Identifizierungseinheit (42) zum Durchsuchen von Nutzdatenabschnitten der Datenpakete (80) ausgebildet ist
und/oder
die Umleitungseinheit (34) zwischen dem Gateway (32) und dem Server (22) angeordnet ist
und/oder
die erste Erfassungseinheit (40) bei der Umleitungseinheit (34) bereitgestellt wird und/oder die erste Erfassungseinheit (40) zum Erfassen der Anzahl der Datenpakete (80), der Transferrichtung, der Transferdauer, der Absenderadresse und/oder der Empfängeradresse der Datenpakete (80) ausgebildet ist
und/oder
eine zweite Erfassungseinheit (56) zum Erfassen eines nicht umgeleiteten Datentransfers von Datenpaketen zwischen dem Endgerät (14) und dem Server (22) vorgesehen ist und/oder die zweite Erfassungseinheit (56) beim Gateway (32) angeordnet ist und/oder die zweite Erfassungseinheit (56) zum Erfassen der Anzahl der Datenpakete, der Transferrichtung, der Transferdauer, der Absenderadresse und/oder der Empfängeradresse der Datenpakete ausgebildet ist.

10. Erfassungssystem (60) nach einem der Ansprüche 7 bis 9, **dadurch gekennzeichnet, dass**
die Gebührenermittlungseinheit (58) zum Ermitteln von Gebührendaten jeweils für einen Benutzer des Endgeräts (14) und für einen Anbieter von Daten oder Diensten über den Server (22) ausgebildet ist
und/oder
der Server (22) ein Web-Server zum Anbieten von Daten oder Diensten im Format von Webseiten (70) oder ein WAP-Server zum Anbieten von Daten oder Diensten im Format von WAP-Seiten ist.

11. Umleitungseinheit (34) zum Empfangen und Weiterleiten eines bestimmten bidirektionalen Datentransfers von Datenpaketen (80) derjenigen Daten- oder Dienstanforderungen, für welche eine Erfassung und eine Vergebührung in Abhängigkeit des Dienstes oder der Datenanforderung erwünscht ist, zwischen einem Endgerät (14) eines Telekommunikationsnetzes (10) und einem Server (22) in einem paketorientierten Datennetz (18), das durch ein Gateway (32) mit dem Telekommunikationsnetz (10) verbunden ist, umfassend:
a) eine Empfangseinrichtung zum Empfangen einer Weiterleitungsaufforderung vom Server (22) für einen bestimmten Datentransfer zwischen dem Server (22) und dem Endgerät (14),
b) eine Datentransfereinrichtung (38) zum Durchführen der Umleitung des bestimmten bidirektionalen Datentransfers von Datenpaketen (80) zwischen dem Endgerät (14) und dem Server (22) über die Umleitungseinheit (34),
c) eine Identifizierungseinheit (42) zum Durchsuchen von empfangenen Datenpaketen (80) des bestimmten Datentransfers nach einem dienst- oder datenbezogenem Identifikationsmerkmal (44),
d) eine erste Erfassungseinheit (40) zum Erfassen des weitergeleiteten Datentransfers anhand der von der Identifizierungseinheit (42) durchsuchten Datenpakete (80) des umgeleiteten Datentransfers, und
e) eine Gebührenermittlungseinheit (58) zum Ermitteln von Gebührendaten anhand des erfassten Datentransfers.

12. Umleitungseinheit (34) nach Anspruch 11,
**dadurch gekennzeichnet, dass**
eine Zuordnungseinheit (50) zum Zuordnen einer Adresse angeforderter Daten oder Dienste des Servers (22) anhand des Identifikationsmerkmals (44) zu empfangenen Datenpaketen (80) für eine Weiterleitung der Datenpakete (80) an den Server (22) vorgesehen ist.

## Claims

1. A method for capturing a particular bidirectional data transfer of data packets (80) of those data or service requests for which a collection in dependence on the service or the data request and a billing is desired, between a terminal (14) of a telecommunication network (10) and a server (22) in a packet-oriented data network (18) which is connected to the telecommunication network (10) by means of a gateway (32), comprising the process steps:
a) transmitting (74) a data or service request (72) for a particular data transfer from the terminal (14) via the telecommunication network (10), the gateway (32) and the packet-oriented data network (18) to the server (22),
b) transmitting (76) a network address (36) of a diverting unit (34) as response to the data or service request (72) for a particular data transfer from the server (22) to the terminal (14),
c) carrying out a diversion of a particular bidirectional data transfer (78) of service or data-related data packets (80) between the terminal (14) and the server (22) via the telecommunication network (10), the gateway (32), the diverting unit (34) and the packet-oriented data network (18),
d) including a service or data-related identification mark (44) in the service or data-related data packets (80) for the diverted data transfer at the terminal (14) and/or at the server (22),
e) searching received service or data-related data packets (80) for the identification mark (44) by means of an identification unit (42) of the deviating unit (34),
f) capturing the particular data transfer deviated by the deviating unit (34) by means of a first capturing unit (40) on the base of the data packets (80) of the deviated data transfer which have been searched by the identification unit (42), and
g) determining billing data by means of a billing determination unit (58) of the deviating unit (34) on the base of the captured data transfer.

2. A method according to claim 1, **characterized in that**
an allocation of an address of requested data or services of the server (22) on the base of the identification mark (44) will be carried out by means of an allocation unit (50) of the deviating unit (34) for capturing the data packets (80) and forwarding the service or data-related data packets (80) to the server (22)
and/or
a transmission (76) of the identification mark (44) for requested data or services of the server (22) as response to the data or service request (72) will take place from the server (22) to the terminal (14).

3. A method according to one of the claims 1 to 2, **characterized in that**
a header data section of the service or data-related data packets (80) comprises the network address (36) of the deviating unit (34),
and/or
the identification mark (44) will be included in a header data section of respectively one service or data-related data packet (80) and the header data sections of the service or data-related data packets (80) will be searched by the identification unit (42) of the deviating unit (34),
and/or
the identification mark (44) will be included in a user data section of respectively one service or data-related data packet (80) and the user data sections of the data packets (80) will be searched by the identification unit (42) of the deviating unit (34).

4. A method according to one of the claims 1 to 3, **characterized in that**
the deviating unit (34) is provided in the data transfer between the gateway (32) and the server (22),
and/or
the first capturing unit (40) will be provided at the deviating unit (34),
and/or
the number of the data packets (80), the transfer direction, the duration of the transfer, the sender's address and/or the receiver's address of the data packets (80) will be captured by the first capturing unit (40).

5. A method according to one of the claims 1 to 4, **characterized in that**
a second capturing unit (56) will capture a non-deviated data transfer of data packets between the terminal (14) and the server (22) and/or the second capturing unit (56) will be provided at the gateway (32),
and/or
the number of the data packets (80), the transfer direction, the duration of the transfer, the sender's address and/or the receiver's address of the data packets (80) will be captured by the second capturing unit (56),
and/or
billing data respectively for a user of the terminal (14) and for a provider of data or services will be determined via the server (22).

6. A method according to one of the claims 1 to 5,
**characterized in that**
the server (22) as a web server provides data or services in the format of websites (70) or as a WAP server provides data or services in the format of WAP pages.

7. A capturing system (60) for a particular bidirectional data transfer of data packets (80) of those data or service requests for which a collection and a billing in dependence on the service or the data request is desired, between a terminal (14) of a telecommunication network (10) and a server (22) in a packet-oriented data network (18) which is connected to the telecommunication network (10) by means of a gateway (32), comprising:
a) a request unit (28) of the terminal (14) for transmitting a data or service request (72) for a particular data transfer from the terminal (14) via the telecommunication network (10), the gateway (32) and the packet-oriented data network (18) to the server (22),
b) a data transfer device (20) arranged in the telecommunication network (10) for carrying out the particular bidirectional data transfer of data packets (80) between the terminal (14) and the server (22) via the telecommunication network (10), the gateway (32) and the packet-oriented data network (18),
c) a deviating unit (34) for receiving and forwarding the data packets (80) of the particular bidirectional data transfer,
d) sending means (52) of the server (22) for transmitting a network address (36) of the deviating unit (34) to the terminal (14) as response to the data or service request (72) transmitted by the terminal (14) to the server (22),
wherein
e) marking means (46, 48) for including a service or data-related identification mark (44) in the data packets (80) for the deviated particular data transfer are provided in the terminal (14) and/or the server (22),
f) an identification unit (42) for searching received data packets (80) for the identification mark (44) is provided in the deviating unit (34),
g) a first capturing unit (40) for capturing the particular data transfer via the deviating unit (34) by means of the data packets (80) of the forwarded data transfer, which data packets have been searched by the identification unit (42) and are provided with service or data-related identification marks (44), is provided in the deviating unit (34), and
h) a billing determination unit (58) for determining billing data on the base of the captured data transfer is provided in the deviating unit (34).

8. A capturing system (60) according to claim 7, **characterized in that**
an allocation unit (50) for allocating an address of requested data or services of the server (22) by means of the identification mark (44) to data packets (80) to be received is provided in the deviating unit (34) for capturing the data packets (80) and forwarding the service or data-related data packets (80) to the server (22),
and/or
a transmission means (54) is provided in the deviating unit (34) for transmitting the identification mark (44) for requested data or services of the server (22) as response to the data and service request (72) from the server (22) to the terminal (14),
and/or
marking means (46, 48) are provided for including the identification mark (44) in a header data section of respectively one data packet (80) and the identification unit (42) of the deviating unit (34) is designed for searching header data sections of the data packets (80).

9. A capturing system (60) according to one of the claims 7 or 8,
**characterized in that**
the marking means (46, 48) are configured for including the identification mark (44) in a user data section of respectively one data packet (80) and the identification unit (42) is configured for searching user data sections of the data packets (80)
and/or
the deviating unit (34) is arranged between the gateway (32) and the server (22)
and/or
the first capturing unit (40) is provided at the deviating unit (34) and/or the first capturing unit (40) is configured for capturing the number of the data packets (80), the transfer direction, the duration of the transfer, the sender's address and/or the receiver's address of the data packets (80)
and/or
a second capturing unit (56) for capturing a not deviated data transfer of data packets is provided between the terminal (14) and the server (22) and/or the second capturing unit (56) is arranged at the gateway (32) and/or the second capturing unit (56) is configured for capturing the number of the data packets (80), the transfer direction, the duration of the transfer, the sender's address and/or the receiver's address of the data packets.

10. A capturing system (60) according to one of the claims 7 to 9, **characterized in that**
the billing determination unit (58) is configured for determining billing data respectively for a user of the terminal (14) and for a provider of data or services via the server (22)
and/or
the server (22) is a web server for offering data or services in the format of websites (70) or a WAP server for offering data or services in the format of WAP pages.

11. A deviating unit (34) for receiving and forwarding a particular bidirectional data transfer of data packets (80) of those data or service requests for which a collection and a billing in dependence on the service or the data request is desired, between a terminal (14) of a telecommunication network (10) and a server (22) in a packet-oriented data network (18) which is connected to the telecommunication network (10) by means of a gateway (32), comprising:
a) a receiving device for receiving a forwarding request from the server (22) for a particular data transfer between the server (22) and the terminal (14),
b) a data transfer device (38) for carry out the deviation of the particular bidirectional data transfer of data packets (80) between the terminal (14) and the server (22) via the deviating unit (34),
c) an identification unit (42) for searching received data packets (80) of the particular data transfer for a service or data-related identification mark (44),
d) a first capturing unit (40) for capturing the forwarded data transfer by means of the data packets (80) of the deviated data transfer, which data packets (80) have been searched by the identification unit (42), and
e) a billing determination unit (58) for determining billing data on the base of the captured data transfer.

12. A deviating unit (34) according to claim 11,
**characterized in that**
an allocation unit (50) is provided for allocating an address of requested data or services of the server (22) on the base of the identification mark (44) to received data packets (80) for forwarding the data packets (80) to the server (22).

## Revendications

1. Procédé de saisie d'un transfert de données bidirectionnel particulier de paquets de données (80) de telles demandes de donnés ou de services, pour lesquelles on désire une saisie en fonction du service ou de la demande de données et une facturation, entre un terminal (14) d'un réseau de télécommunication (10) et un serveur (22) dans un réseau de données à transmission par paquets (18), qui est relié au réseau de télécommunication (10) par une passerelle (32), comprenant les étapes de procédé de :
a) transmettre (74) une demande de données ou de service (72) pour un transfert de données particulier du terminal (14) via le réseau de télécommunication (10), la passerelle (32) et le réseau de données à transmission par paquets (18) au serveur (22),
b) transmettre (76) une adresse de réseau (36) d'une unité de déviation (34) comme réponse à la demande de données ou de service (72) pour un transfert de données particulier du serveur (22) au terminal (14),
c) effectuer une déviation du transfert de données bidirectionnel particulier (78) de paquets de données associées aux services ou aux données (80) entre le terminal(14) et le serveur (22) via le réseau de télécommunication (10), la passerelle (32), l'unité de déviation (34) et le réseau de données à transmission par paquets (18),
d) insérer un élément d'identification (44) dans les paquets de données associées aux services ou aux données (80) pour le transfert de données dévié dans le terminal (14) et/ou dans le serveur (22),
e) parcourir des paquets de données associées aux services ou aux données (80) reçus à la recherche de l'élément d'identification (44) par une unité d'identification (42) de l'unité de déviation (34),
f) saisir le transfert de données particulier dévié via l'unité de déviation (34) par une première unité de saisie (40) sur la base des paquets de données (80) du transfert de données dévié, lesquels paquets de données (80) ont été parcourus par l'unité d'identification (42), et
g) déterminer des données de facturation par une unité de détermination de frais (58) de l'unité de déviation (34) sur la base du transfert de données saisi.

2. Procédé selon la revendication 1, **caractérisé en ce que**
une attribution d'une adresse de données ou de services demandés du serveur (22) aux paquets de données reçus (80) est effectuée sur la base de l'élément d'identification (44) par moyen d'une unité d'attribution (50) de l'unité de déviation (34) pour saisir les paquets de données (80) et retransmettre les paquets de données associées aux services ou aux données (80) au serveur (22)
et/ou
une transmission (76) de l'élément d'identification (44) pour des données ou des services demandés du serveur (22) se fait comme réponse à la demande de données ou de services (72) du serveur (22) au terminal (14).

3. Procédé selon l'une des revendications 1 à 2, **caractérisé en ce que**
une partie de données d'en-tête des paquets de données associées aux services ou aux données (80) comprend l'adresse de réseau (36) de l'unité de déviation (34),
et/ou
l'élément d'identification (44) est inséré dans une partie de données d'entête de respectivement un paquet de données associées aux services ou aux données (80) et les parties de données d'en-tête des paquets de données associées aux services ou aux données (80) sont parcourues par l'unité d'identification (42) de l'unité de déviation (34),
et/ou
l'élément d'identification (44) est inséré dans une partie de données utiles de respectivement un paquet de données associées aux services ou aux données (80) et les parties de données utiles des paquets de données associées aux services ou aux données (80) sont parcourues par l'unité d'identification (42) de l'unité de déviation (34).

4. Procédé selon l'une des revendications 1 à 3, **caractérisé en ce que**
l'unité de déviation (34) est fournie dans le transfert de données entre la passerelle (32) et le serveur (22),
et/ou
la première unité de saisie (40) est fournie dans l'unité de déviation (34),
et/ou
le nombre de paquets de données (80), la direction de transfert, la durée de transfert, l'adresse d'expéditeur et/ou l'adresse de récepteur des paquets de données (80) sont saisis par la première unité de saisie (40).

5. Procédé selon l'une des revendications 1 à 4, **caractérisé en ce que**
une deuxième unité de saisie (56) saisit un transfert de données non dévié de paquets de données entre le terminal (14) et le serveur (22) et/ou la deuxième unité de saisie (56) est fournie dans la passerelle (32),
et/ou
le nombre de paquets de données (80), la direction de transfert, la durée de transfert, l'adresse d'expéditeur et/ou l'adresse de récepteur des paquets de données (80) sont saisis par la deuxième unité de saisie (56),
et/ou
des données de facturation sont respectivement déterminées pour un utilisateur du terminal (14) et pour un fournisseur de données ou de services via le serveur (22).

6. Procédé selon l'une des revendications 1 à 5,
**caractérisé en ce que**
le serveur (22) en tant que serveur Internet offre des données ou des services dans le format de sites Web (70) ou en tant que serveur WAP offre des données ou des services dans le format de pages WAP.

7. Système de saisie (60) d'un transfert de données bidirectionnel particulier de paquets de données (80) de telles demandes de donnés ou de services, pour lesquelles on désire une saisie et une facturation en fonction du service ou de la demande de données, entre un terminal (14) d'un réseau de télécommunication (10) et un serveur (22) dans un réseau de données à transmission par paquets (18), qui est relié au réseau de télécommunication (10) par une passerelle (32), comprenant :
a) une unité de demande (28) du terminal (14) pour transmettre (74) une demande de données ou de service (72) pour un transfert de données particulier du terminal (14) via le réseau de télécommunication (10), la passerelle (32) et le réseau de données à transmission par paquets (18) au serveur (22),
b) un dispositif de transfert de données (30) disposé dans le réseau de télécommunication (10) pour effectuer le transfert de données bidirectionnel particulier de paquets de données entre le terminal (14) et le serveur (22) via le réseau de télécommunication (10), la passerelle (32) et le réseau de données à transmission par paquets (18),
c) une unité de déviation (34) pour recevoir et retransmettre les paquets de données (80) du transfert de données bidirectionnel particulier,
d) des moyens d'émission (52) du serveur (22) pour transmettre une adresse de réseau (36) de l'unité de déviation (34) au terminal (14) comme réponse (76) à la demande de données ou de services (72) transmise du terminal (14) au serveur (22),
dans lequel
e) des moyens de marquage (46, 48) sont prévus dans le terminal (14) et/ou dans le serveur (22) pour insérer un élément d'identification (44) associé aux services et aux données dans les paquets de données (80) pour le transfert de données particulier dévié,
f) une unité d'identification (42) est prévue dans l'unité de déviation (34) pour parcourir des paquets de données reçus à la recherche de l'élément d'identification,
g) une première unité de saisie (40) est prévue dans l'unité de déviation (34) pour saisir le transfert de données particulier via l'unité de déviation (34) à l'aide des paquets de données (80) du transfert de données retransmis, lesquels paquets de données (80) ont été parcourus par l'unité d'identification (44) et sont munis d'éléments d'identification associés aux services ou aux données, et
h) une unité de détermination de frais (58) est prévue dans l'unité de déviation (34) pour déterminer des données de frais à l'aide du transfert de données saisi.

8. Système de saisie (60) selon la revendication 7, **caractérisé en ce que**
une unité d'attribution (50) est prévue dans l'unité de déviation (34) pour attribuer une adresse de données ou de services demandés du serveur (22) aux paquets de données reçus (80) sur la base de l'élément d'identification (44) pour saisir les paquets de données (80) et retransmettre les paquets de données associées aux services ou aux données (80) au serveur (22),
et/ou
un moyen de transmission (54) est prévu dans l'unité de déviation (34) pour transmettre l'élément d'identification (44) pour des données ou des services demandés du serveur (22) comme réponse à la demande de données et de services (72) du serveur (22) au terminal (14),
et/ou
des moyens de marquage (46, 48) sont prévus pour insérer l'élément d'identification (44) dans un partie de données d'en-tête de respectivement un paquet de données (80) et l'unité d'identification (42) de l'unité de déviation (34) est configurée pour parcourir des parties de données d'en-tête des paquets de données (80).

9. Système de saisie (60) selon l'une des revendications 7 ou 8,
**caractérisé en ce que**
les moyens de marquage (46, 48) sont configurés pour insérer l'élément d'identification (44) dans un partie de données utiles de respectivement un paquet de données (80) et l'unité d'identification (42) est configurée pour parcourir des parties de données utiles des paquets de données (80)
et/ou
l'unité de déviation (34) est disposée entre la passerelle (32) et le serveur (22)
et/ou
la première unité de saisie (40) est fournie à l'unité de déviation (34) et/ou la première unité de saisie (40) est configurée pour saisir le nombre de paquets de données (80), la direction de transfert, la durée de transfert, l'adresse d'expéditeur et/ou l'adresse de récepteur des paquets de données (80)
et/ou
une deuxième unité de saisie (56) est prévue pour saisir un transfert de données non dévié de paquets de données entre le terminal (14) et le serveur (22) et/ou la deuxième unité de saisie (56) est disposée à la passerelle (32) et/ou la deuxième unité de saisie (56) est configurée pour saisir le nombre de paquets de données (80), la direction de transfert, la durée de transfert, l'adresse d'expéditeur et/ou l'adresse de récepteur des paquets de données (80).

10. Système de saisie (60) selon l'une des revendications 7 à 9, **caractérisé en ce que**
l'unité de détermination de frais (58) est configurée pour déterminer des données de facturation respectivement pour un utilisateur du terminal (14) et pour un fournisseur de données ou de services via le serveur (22)
et/ou
le serveur (22) est un serveur Internet pour offrir des données ou des services dans le format de sites Web (70) ou un serveur WAP pour offrir des données ou des services dans le format de pages WAP.

11. Unité de déviation (34) pour recevoir et retransmettre un transfert de donnés bidirectionnel particulier de paquets de données (80) de telles demandes de donnés ou de services, pour lesquelles on désire une saisie et une facturation en fonction du service ou de la demande de données, entre un terminal (14) d'un réseau de télécommunication (10) et un serveur (22) dans un réseau de données à transmission par paquets (18), qui est relié au réseau de télécommunication (10) par une passerelle (32), comprenant :
a) un dispositif de réception pour recevoir une demande de retransmission du serveur (22) pour un transfert de données particulier entre le serveur (22) et le terminal (14),
b) un dispositif de transfert de données (38) pour effectuer la déviation du transfert de données bidirectionnel particulier de paquets de données (80) entre le terminal (14) et le serveur (22) via l'unité de déviation (34),
c) une unité d'identification (42) pour parcourir des paquets de données (80) reçus du transfert de données particulier à la recherche d'un élément d'identification (44) associé aux services ou aux données,
d) une première unité de saisie (40) pour saisir le transfert de données retransmis à l'aide des paquets de données (80) du transfert de données dévié, lesquels paquets de données (80) ont été parcourus par l'unité d'identification (44), et
e) une unité de détermination de frais (58) pour déterminer des données de facturation à l'aide du transfert de données saisi.

12. Unité de déviation (34) selon la revendication 11,
**caractérisée en ce que**
une unité d'attribution (50) est prévue pour attribuer une adresse de données ou de services demandés du serveur (22) aux paquets de données reçus (80) sur la base de l'élément d'identification (44) pour retransmettre les paquets de données (80) au serveur (22).
